# EUROPEAN PATENT APPLICATION

(11) **EP 1 743 913 A1**
(43) Date of publication of application: **17.01.2007**
(21) Application number: 05014946.7
(22) Date of filing: 11.07.2005
(51) Int. Cl.: C08J 3/03, C08J 3/07

(54) **Continuous process and apparatus for preparing aqueous polymer dispersions**

(71) Applicant: PolymerLatex GmbH, 45772 Marl (DE)
(72) Inventor: Butz, Sören, 41569 Rommerskirchen/Widdeshoven (DE); Couhorn, Uwe, 45130 Essen (DE); Hertel, Reinhold, 45772 Marl (DE); Vogt, Hans-Günter, 41540 Dormagen (DE); Wolters, Dieter, 48249 Dülmen (DE)
(74) Representative: Sternagel, Fleischer, Godemeyer & Partner

(57) **Abstract**

The present application describes an apparatus for continuously making an aqueous polymer dispersion comprising:
a) means (5) for continuously forming a heterogeneous mixture of an organicliquid phase and an aqueous phase;
b) at least one homogenizing device (6) having an inlet opening (7) and an outlet opening (8);
c) conduits (12) for interconnecting said means (5) for continuously forming said heterogeneous mixture to the inlet opening (7) of the at least one homogenizing device (6);
d) means (9) for separating the effluent from the at least one homogenizing device (6) connected to the outlet opening (8) of said at least one homogenizing device (6) into a first stream (10) and into a second stream (11); and
e) means for recovering the aqueous polymer dispersion;
characterized by
f) conduits (13) for passing the first stream and connecting the separating means (9) to a conduit junction (15) positioned between the means (5) for forming the heterogeneous mixture and the inlet opening (7) of the same homogenizing device (6) or the inlet opening of another homogenizing device that is not downstream with respect to the flow direction from said homogenizing device (6) and
a method for continuously making an aqueous polymer dispersion.

## Description

The present invention relates to a continuous process for preparing a polymer dispersion and an apparatus for conducting the same.

Emulsions and solutions, in particular elastomer solutions, in aqueous emulsifier solutions are known in principle and are described, for example, in US Patent No. 3,226,349, US Patent No. 2,944,038, US Patent No. 3,062,767, US Patent No. 4,243,566, US Patent No. 4,070,325, US Patent No. 3,892,703, US Patent No. 3,998,772, US Patent No. 4,177,177, EP-A-0 339 559 and DE-A-19 659 34.

According to a known process the polymer dispersion or emulsion is conventionally prepared in such a way that a polymer solution as organic phase is placed in contact with an aqueous phase while using high shear power. A wide variety of different units are used for the shear-induced dispersion of the organic polymer-containing phase in the aqueous phase (oil-in-water emulsion), such as high-pressure (gap) homogenizers, ultrasonic dispersers, Ultra-Turrax, Kotthoff mixing sirens, dissolver discs, colloid mills and a wide variety of designs of various nozzles. When selecting and comparing dispersion equipment for preparing dispersions, reference may be made to literature known to the person skilled in the art, e.g. P. Walstra, Formation of Emulsions, in: P. Becher, Encyclopedia of Emulsion Technology, vol. 1, New York, Basle 1983. All agree that selection of the dispersion machine depends on the volume-specific power. To produce finely divided emulsions (<1 µm) dispersion machines with high volume-specific powers are required, such as, or instance the high-pressure homogenizers mentioned above. Such finely divided emulsions can barely be produced at all using machines operating on the rotor/stator principle.

In the known process, the solvent is removed by stripping, pressure reduction (flashing) or by some other distillative process. Furthermore, the relatively low concentration emulsions (thin latex) may be brought up to the final concentration required by distilling, centrifuging or by creaming.

The disadvantage of the known process for preparing polymer dispersions is in particular that very high shear powers have to be applied in order to obtain stable emulsions at all. In addition, large-scale performance of the known process for preparing polymer dispersions requires complicated equipment and is energy intensive. Furthermore, it is a disadvantage that large amounts of emulsifiers are required in order to obtain stable emulsions when using the known process. For further use of the polymer dispersions, large amounts of emulsifiers then have to be removed because these may have an adverse effect on the properties of the product produced from the polymer dispersions.

These problems were addressed in EP-A-863 173.

In this reference two different processes for preparing stable finely divided polymer dispersions are discussed. In the batch process first a water-in-oil emulsion is prepared by introducing the organic phase containing the polymer into a container encirculating this via a homogenizing nozzle and adding the aqueous phase in a separate material stream upstream of a homogenizing nozzle. In each circulation enough aqueous phase is added to achieve a final phase inversion to an oil-in-water emulsion. As an alternative a continuous process is disclosed wherein three homogenizing devices are connected in series and the emulsifier-containing aqueous solution is added to the polymer solution and the resulting emulsions from a previous homogenizing device, respectively, prior to each of the homogenizing devices.

US-Patent 4,123,403 discloses a similar device and process or making an aqueous polymer dispersion wherein a homogenizing unit is used and the polymer solution is fed into one end of the device and the aqueous emulsifier-containing solution is added at several positions along the flow direction of the polymer solution through the homogenizing device. The device disclosed in US-Patent 4,123,403 works according to the rotor/stator principle and is therefore considered less effective than the device described in EP-A-863 173.

Although the apparatuses and processes described in EP-A-863 173 result in stable aqueous polymer dispersions this is only achieved by using either a batchwise process which is economically undesirable for an industrial scale process or in the continuous process a stable emulsion could only be achieved using very high pressure in the order of 24 bars. Furthermore the starting solutions and emulsions, respectively, have to be pressurized in each homogenizing device or prior to passing through the homogenizing device resulting in high investment and process costs.

Thus it is the object of the present invention to provide a process and an apparatus for continuously preparing a stable aqueous polymer dispersion on an industrial scale whereby stable polymer dispersions with small particle sizes using low amounts of emulsifier are obtainable thereby reducing investment and process costs compared to the above discussed prior art processes.

Furthermore it would be advantageous if the process could be conducted at relatively low pressures so that also aqueous dispersions of shear sensitive polymers can be prepared.

Additionally it would be advantageous for an industrial scale process and apparatus to be easily adjustable to different emulsifying problems and throughput.

### SUMMARY OF THE INVENTION

The above discussed objects can be attained by a continuous process for preparing aqueous polymer dispersions by
a) continuously forming a heterogeneous mixture of an organic liquid phase comprising a polymer and an aqueous phase in presence of an emulsifier,
b) subjecting the mixture obtained in step a) to a shear force in at least one homogenizing device and
c) continuously recovering an oil-in-water dispersion, characterized by
d) continuously recycling a portion of the effluent from at least one homogenizing device to the same homogenizing device or to an other homogenizing device that is not downstream with respect to the flow direction from said homogenizing device,
   and by an apparatus for continuously making an aqueous polymer dispersion comprising:

a) means for continuously forming a heterogeneous mixture of an organic liquid phase and an aqueous phase,
b) at least one homogenizing device having an inlet opening and an outlet opening,
c) conduits for interconnecting said means for continuously forming said heterogeneous mixture to the inlet opening of the at least one homogenizing device,
d) means for separating the effluent from the at least one homogenizing device connected to the outlet opening of said at least one homogenizing device into a first stream and into a second stream, and
e) means for recovering the aqueous polymer dispersion, characterized by
f) conduits for passing the first stream and connecting the separating means to a conduit junction positioned between the means for forming the heterogeneous mixture and the inlet opening of the same homogenizing device or the inlet opening of another homogenizing device that is not downstream with respect to the flow direction from said homogenizing device.

### DETAILED DESCRIPTION OF THE PRESENT INVENTION

It is a surprising result that by using the process and the apparatus of the present invention a stable polymer dispersion can be obtained with a weight average polymer particle size of less than 1 µm, preferably less than 0.6 µm using low emulsifier concentrations and low shear forces in a continuous process.

Furthermore these advantages could be achieved with lower investment and process costs compared to the continuous process and apparatus disclosed in EP-A-863 173.

For example, the process and apparatus disclosed in EP-A-863 173 requires the addition of the aqueous emulsifier solution prior to each pass through each homogenizing device resulting in increased investment costs in terms of dosing meters, pumps, etc.

In contrast thereto in all embodiments that will be discussed in more detail below the present invention requires only one dosing unit for the emulsifier solution. Although less preferred it is within the ambit of the present invention to include also additional dosing units for the emulsifier solution in case it is necessary for specific emulsifying problems.

According to the process and the apparatus of the present invention one or more emulsifying units can be employed. Thereby it is only important that a portion of the effluent of one homogenizing device is recycled either to the same homogenizing device or to another homogenizing device that is not downstream from the first homogenizing device. Thereby it is achieved that at least a portion of the emulsion is continuously recycled to the same homogenizing device or to an equivalent homogenizing device. This cannot be achieved if only homogenizing devices are present where the total effluent is passed to a downstream homogenizing device.

The teaching of EP-A-863 173 irrespective of whether it relates to the batchwise or the continuous process requires in any event that first a water-in-oil emulsion is formed and that be sequential addition of aqueous emulsifier solution to the water-in-oil emulsion a phase inversion to an oil-in-water emulsion is obtained.

Surprisingly, although the sequential addition of aqueous emulsifier solution is not necessary according to the present invention nevertheless, as will be seen from the experimental data presented herein, polymer dispersions of improved quality in terms of reduced particle size with low amounts of emulsifiers can be obtained.

According to one embodiment of the apparatus of the present invention a plurality of homogenizing devices are connected in parallel with respect to the flow direction. The outlet opening of at least one of the homogenizing devices, preferably of all homogenizing devices, is connected to means for separating the effluent from the homogenizing device into a first stream that is recycled, and into a second stream that passes through the apparatus in flow direction. The conduits for passing said first stream, i.e. the recycled stream, may be connected to any of the homogenizing devices that are connected in parallel with respect to the flow direction. It is preferred that the conduits for passing the first stream, i.e. the recycled stream, are connected to the inlet opening of the same homogenizing device.

According to a particularly preferred embodiment of the apparatus of the present invention the outlet opening of each of the with respect to the flow direction parallel homogenizing devices are connected to separating means and all the conduits connect the respective separating means with a single conduit junction that is positioned between the means for forming the heterogeneous mixture of an organic liquid phase comprising the polymer and the aqueous phase and a distribution device for distributing the feed to the parallel homogenizing devices. Thus, by using this apparatus the recycle streams of all the homogenizing devices are recycled to the same point upstream of the distributing unit for dividing the feed to each parallel homogenizing device. According to this embodiment advantageously a pump can be positioned between said single conduit junction and the distribution unit with the result that a single pump is sufficient to obtain the required pressure for each of the parallel homogenizing devices. The above described embodiment of the apparatus and the process of the present invention is particularly advantageous in terms of the balance of investment and process costs and flexibility of process.

Although multiple parallel homogenizing units might be required which results in a slight increase in investment cost still only one dosing unit for the polymer solution and the aqueous phase and only one pump for obtaining the required pressure for all homogenizing devices are necessary. Since these devices are particularly capital-intense the investment costs for this embodiment of the present invention are still considerably lower than those for the continuous apparatus disclosed in EP-A-863 173.

On the other side, this embodiment can be flexibly adjusted to requirements in terms of total throughput and difficulty of the forming of the respective polymer dispersion. For example, if it is, depending on the selected polymer and emulsifier and emulsifier concentration, particularly difficult to prepare a stable polymer dispersion the portion of the recycle stream of the total effluent of each homogenizing device can be high, e.g. in the order of more than 75 or 90%, with the result of a considerably long residence time in the apparatus and thus low throughput. To compensate for this low throughput an increased number of parallel homogenizing devices can be employed without reducing the residence time. In case of a low residence time, or in other terms a small percentage of the total effluent from the homogenizing devices is recycled, i.e. for example less than 20 or 10%, or the maximum capacity of the apparatus is presently not required some of the parallel homogenizing devices can simply be shut off.

Consequently this embodiment of the present invention combines high efficiency, considerably low investment and process cost with high flexibility.

With all the embodiments of the apparatus with a plurality of parallel homogenizing devices described above a process can be conducted where at least a portion of the effluent of at least one of the homogenizing devices is recycled to any of the homogenizing devices.

According to an alternative embodiment of the apparatus of the present invention a plurality of homogenizing devices are connected in series with respect to the flow direction. The outlet opening of at least one of said homogenizing devices is connected to a means for separating the effluent from said homogenizing device into a first stream, i.e. recycle stream, and into a second stream. Conduits are present that connect the separating device with either the inlet opening of the same homogenizing device or with the inlet opening of a homogenizing device upstream from said first homogenizing device for recycling said first stream. Although this embodiment is not particularly preferred in terms of investment and process costs reduction it can be used for systems where a stable polymer dispersion is particularly difficult to prepare. Especially it is also possible to feed additional aqueous emulsifier solution into the system between two homogenizing devices connected in series.

Of course, it is also within the ambit of the present invention to combine homogenizing devices connected in parallel with homogenizing devices connected in series with respect to the flow direction in the apparatus.

In terms of investment cost it is preferred to have as few as possible homogenizing devices, for example, two or three devices in case of devices connected in parallel and/or in series in case expensive homogenizing devices are employed. Then it is particularly preferred to employ only one homogenizing device.

Furthermore, it is preferred in all embodiments for the apparatus of the present invention to position a pump between the conduit junction that is connected to said separating means in order to recycle the above described first stream (recycle stream) and the inlet opening of the at least one homogenizing device.

In the apparatus and the process according to the present invention rotor/stator dispersing machines, such as for example colloid mills, tooth rim dispersing machines and high-pressure homogenizers, can be employed. But preferably a jet-disperser is used. According to a preferred embodiment of the present invention the jet-disperser is a pressure reduction nozzle which has a much higher degree of efficiency than high-pressure homogenizers. The description of this nozzle can be found in EP-A-0 101 007. According to the present invention using the preferred pressure reduction nozzle stable polymer dispersions having the desired particle size can be obtained with a pressure of 8 to 20 bar compared to 24 bar disclosed for the continuous process in EP-A-863 173, or 200 bar for high-pressure homogenizers.

The use of a jet-disperser as homogenizing device is particularly preferred. Since jet-dispersers are relatively inexpensive it is possible to employ a large number of jet-dispersers in parallel in a single pressure housing. The outlets of all the jet-dispersers are preferably connected to a single device for separating the effluent from the homogenizing devices so that a single recycling stream is formed. This preferred apparatus comprises a conduit for connecting said separating device with a conduit junction that is positioned between the means for forming the heterogeneous mixture and a single pump, whereas the pump is positioned upstream of a distribution device that is connected to the inlets of all parallel jet-dispersers. According to this preferred embodiment of the present invention a single pump is sufficient to maintain the desired pressure for the jet-dispersers. The total number of parallel jet-dispersers can be as high as 100 and is preferably 20 to 80 and more preferred 25 to 50.

The above described embodiment is particularly advantageous since even in case of long residence times a for industrial production acceptable throughput can be achieved without compromising the cost efficiency due to the fact that only one dosing unit for each phase, only one device for forming the heterogeneous mixture and only one pump for maintaining the desired pressure is necessary. Thus the number units of the apparatus that are expensive in respect to investment costs and operation costs can be reduced to a minimum.

Suitable devices for separating the effluent from the homogenizing device can be selected from balanced valves, three-way valves, selector valves, three-way stop cocks and any other suitable device known by the person skilled in the art.

In a similar way the distribution device according to the preferred embodiment with parallel homogenizing devices can be selected from distributors, monifolds multiple-way valves and any other suitable device known by the person skilled in the art.

As means for recovering the aqueous polymer dispersion any suitable means known to a person skilled in the art can be employed.

The viscosity of the organic phase is preferably 1.0 to 20,000 mPas, more preferred 10 to 20,000 mPas, and particularly preferred 100 to 5,000 mPas. The interfacial tension between organic and aqueous phase is preferably 0.01 to 30 mN/m, more preferred 0.5 to 30 mN/m, and particularly preferred 0.5 to 5 mN/m.

The ratio of volume of organic phase to aqueous phase is preferable in the range of 80:20 to 20:80, more preferred 70:30 to 30:70, and particularly preferred 60:40 to 40:60.

Preferably the mixture of organic liquid phase and aqueous phase is subjected in at least one homogenizing device to a shear power of 1x10³⁰ to 1x10⁸⁰ Watts/cm³, more preferred of 1x10⁶⁰ to 1x10⁷⁰ Watts/cm³.

Preferably the percentage of the recycled portion of the total effluent from each homogenizing device is independently selected to be in the range of 10 - 95 %, preferably 30 - 90 %, more preferred 50 - 90 %.

In the apparatus according to any of the above described embodiments of the present invention the liquid organic phase comprising the polymer and the aqueous phase are continuously fed to a means for continuously forming a heterogeneous mixture of the organic liquid phase and the aqueous phase. Conventional devices for metering each of the components from storage tanks can be employed. Suitable devices for forming the heterogeneous mixtures are mixers, rotor/stator devices, stirrers and any other suitable device known by the person skilled in the art.

It is also possible to just feed both components into the piping system that is connected to the homogenizers, as described above with respect to all embodiments, whereby a heterogeneous mixture of both components is formed after both components came into contact in the piping system.

The heterogeneous mixture of both components is formed in presence of an emulsifier. For instance, the aqueous phase contains the emulsifier and is then mixed with the organic phase in such a way that the ranges specified above for viscosity and interfacial tension are achieved.

Polymers which are suitable for use in the process according to the invention are either thermoplastic polymers or elastic polymers (rubbers). The following polymers may be mentioned by way of example: polyolefins such as polyethylene, polypropylene, ethylene/α-olefin copolymers such as ethylene/propene copolymers, ethylene/butene copolymers, ethylene/pentene copolymers, ethylene/hexene copolymers, ethylene/heptene copolymers and ethylene/octene copolymers. Obviously, the corresponding isomers may also be used as parent materials or the polyolefins. Polyisobutylenes and their secondary products such as halogenated polyisobutylene and copolymers of isobutylene and methylstyrene, isoprene and chlorinated polyethylene (CM) or chlorosulphonated polyethylene (CSM) are particularly preferably mentioned as polyolefins. In addition the following may be used as polymers: copolymers of ethylene with polar monomers such as vinyl acetate, vinyl esters, acrylates, methacrylates, maleic acid, maleic anhydride, (meth)acrylic acid, fumaric acid and their esters. The following polymers are also suitable: diene polymers such as polybutadiene, polyisoprene, polydimethylbutadiene and their copolymers with each other or with styrene or styrene derivatives, such as α-methylstyrene with acrylonitrile, methacrylonitrile with acrylates or methacrylates. The diene polymers mentioned above may also be present in the form of terpolymers or multiple copolymers. Furthermore, the following are suitable as polymers: natural rubber and its derivatives, polychloroprene and polydichlorobutadiene and their copolymers, and also styrene/butadiene block copolymers. In addition, post-treated polymers may also be used such as hydrogenated nitrile rubbers and hydrogenated styrene/butadiene block copolymers. In addition the following may be used as polymers: polyurethanes, polyesters, polyesteramides, polyethers, polycarbonates and modifications thereof.

The following are preferably used as polymers in the process according to the invention: polyisobutylenes and copolymers of isobutene and isoprene, ethylene/propylene copolymers, ethylene/propylene/diene copolymers, SBR, NBR and HNBR as well as polycarbonates and polyurethanes, in particular copolymers of isobutylene and isoprene, and their halogenated analogues (butyl rubbers, halogenated butyl rubber).

The polymer can be employed neat, as long as it is liquid, under the conditions employed in the process. For example, a polymer that is solid under ambient conditions can be heated above its melting point, as long as the temperature is compatible with other conditions employed in the process. Preferably the polymer is dissolved in a water immiscible organic solvent. The solvent can be aliphatic, aromatic, araliphatic and/or cycloaliphatic hydrocarbons. Hexane, toluene, methylene chloride, benzene, chlorobenzene, methyl ethyl ketone, and mixtures of the above are preferably used.

Emulsifiers which may be used for the process according to the invention are those which are known from and conventionally used in the field of polymer dispersion. The emulsifiers are generally added to the aqueous phase. The following may be used, for example, as emulsifiers in the process according to the invention: aliphatic and/or aromatic hydrocarbons with 8 to 30 carbon atoms which have a hydrophilic terminal group such as a sulphonate, sulphate, carboxylate, phosphate or ammonium terminal group. Furthermore, non-ionic surfactants with functional groups, such as polyalcohols, polyethers and/or polyesters are suitable as emulsifiers.

In principle, any conventional industrial emulsifiers and surfactants which are suitable for stabilizing oil and polymer dispersions in water may be used. The following are preferably used as emulsifiers: fatty acids salts such as the sodium and/or potassium salts of oleic acid, the corresponding salts of alkylaryl sulphonic acids, naphthyl sulphonic acid and their condensation products with, for instance, formaldehyde, and the corresponding salts of alkylsuccinic acids and alkylsulphosuccinic acids. Obviously, it is also possible to use the emulsifiers in any mixture with each other.

Choosing the appropriate emulsifier depends in particular on the polymers to be emulsified, the solvents used and the end properties required for the dispersions prepared according to the invention.

It is important that the emulsifiers chosen are those which enable the surface tension between the organic polymer phase and the aqueous phase to be lowered sufficiently.

Emulsifiers are used in the process according to the invention, in particular, therefore, if the interfacial tension can be reduced to below 10 mN/m, preferably below 3 mN/m, with their assistance.

The amount of emulsifier used again depends on the criteria mentioned above and can readily be determined in an appropriate preliminary test. In this case, obviously, the amount of emulsifier used is only that which is absolutely necessary for successful performance of the process according to the invention. The amount of emulsifier is conventionally 20 to 0.1 parts by wt., in particular 10 to 0.5 parts by wt., with reference to the polymer used. Obviously, the emulsifiers may be used, as mentioned above, on their own or in a mixture with each other. The best mixing ratio again has to be determined in an appropriate preliminary test.

The oil-in-water dispersion recovered from the process according to the present invention can be processed in conventional way. For example, the solvent can be removed and the dispersion can be concentrated to the optimum concentration for the particular ultimate use. Removing the solvent is performed in the conventional manner for example by distillation, pressure reduction, reverse osmosis, cyclone degassing or spraying through nozzles.

After the solvent has been substantially removed (i.e. the residual solvent content in the aqueous dispersion is less than 1000 ppm) the dispersion is concentrated to the optimum concentration for the intended use. Known conventional processes are used for this procedure such as distillation, ultrafiltration, centrifuging, dialysis and so-called creaming using an appropriate creaming agent, such as alginates, wherein a concentrated dispersion (cream) and an aqueous, polymer-deficient phase are formed. The latter may be recycled to the process, as the aqueous phase, optionally after adding fresh emulsifier.

Stable dispersions prepared by the process according to the invention have a polymer concentration of 10 to 70, preferably 40 to 60 wt.% (determined as proportion of solids in the dispersion).

The stable polymer dispersions prepared by the process according to the present invention preferably have a weight average particle size d₅₀ determined by using an ultracentrifuge as described in Journal of Colloid Polymer Science, 267 (1989), 1113 of 0.1 to 50 µm, preferably 0.1 to 10 µm, more preferred of 0.1 to 1 µm, and most preferred of 0.2 to less than 0.6 µm. These particles size ranges preferably relate to the final polymer dispersion after substantially removing the solvent and after adjusting the desired solids content.

The temperature at which the process according to the invention is performed is generally in the range 10 to 80°C, preferably 20 to 50°C. The process according to the invention may be performed either at atmospheric pressure or at elevated pressure. Elevated pressure during the process according to the invention is required only in order to feed the phases to be homogenized through the jet disperser. Homogenization and phase inversion take place in the shear field in the nozzle.

Stable polymer dispersions with a specific polymer size range, prepared by the process according to the invention, contain only small amounts of the emulsifier used (in the range 0.1 to 10 parts by wt.) and are therefore particularly suitable for preparing high-quality dipped articles, laminates, adhesive dispersions and fabric coatings.

### BRIEF DESCRIPTION OF THE DRAWINGS

Fig. 1 is a diagramatic view of an apparatus for the preparation of a polymer dispersion suitable for a single pass through the homogenizing device according to Fig. 4 of EP-A-863 173.
Fig. 2 is a diagramatic view of an apparatus for continuous preparation of polymer dispersions according to Fig. 3 of EP-A-863 173.
Fig. 3 is a diagramatic view of an apparatus having a single homogenizing device according to the present invention.
Fig. 4 is a diagramatic view of an apparatus according to the present invention having homogenizing devices connected in parallel.
Fig. 5 is a diagramatic view of an alternative embodiment of the apparatus according to the present invention having homogenizing devices connected in series.

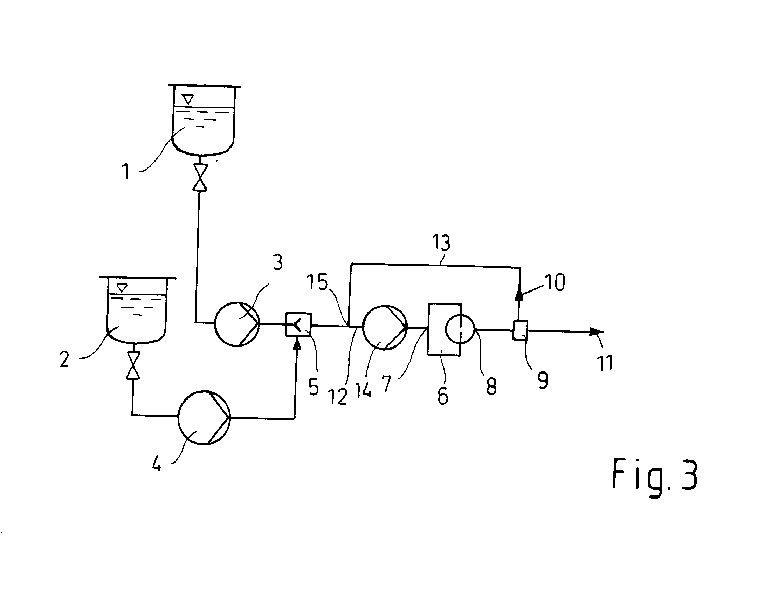

In the embodiment according to the present invention shown in Fig. 3 a container 1 for the emulsifier solution and a container 2 for the rubber solution are connected via respective metering pumps 3, 4 to a mixing device 5. In the mixing device 5 an inhomogeneous mixture of the aqueous emulsifier solution and the rubber solution is formed. The mixing device 5 is connected via a conduit 12 with the inlet opening 7 of a homogenizing device 6. A pump 14 is positioned between the mixing device 5 and the homogenizing device 6 in order to maintain the required pressure for the homogenizing device 6.

The outlet opening 8 of the homogenizing device 6 is connected to a separating means 9 that divides the effluent of the homogenizing device 6 into a first stream 10 and a second stream 11. The first stream is recycled via a conduit 13 that connects the separating means 9 with a conduit junction 15 that is positioned between the mixing device 5 and the pump 14.

In the process of the present invention using the apparatus shown in figure 3 the aqueous emulsifier solution and the rubber solution are continuously fed to the apparatus and the final oil-in-water dispersion is continuously withdrawn as second stream 11.

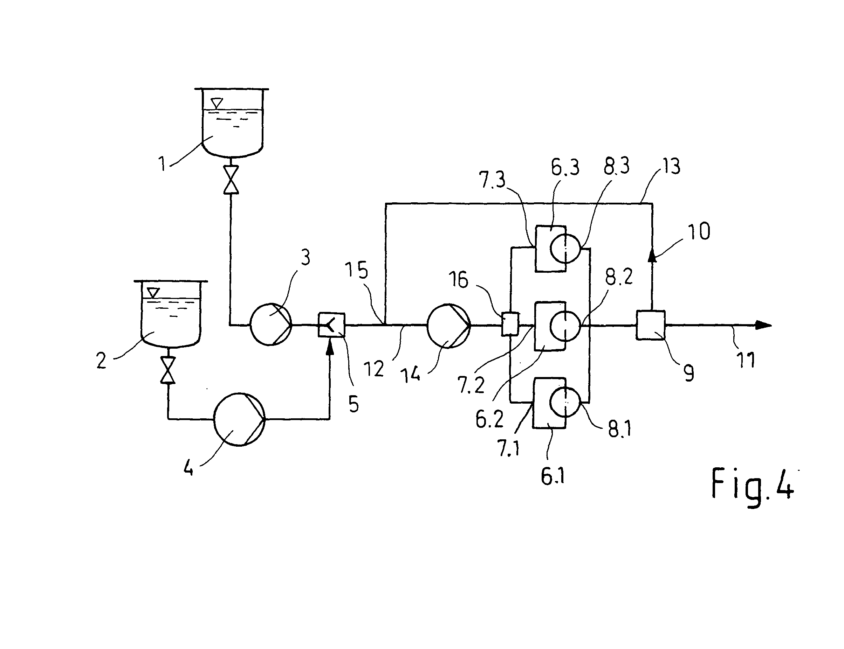

In the embodiment of the present invention having multiple homogenizing devices connected in parallel shown in Fig. 4 the apparatus comprises a container 1 for the aqueous emulsifier solution and a container 2 for the rubber solution. Both containers are connected via respective metering pumps 3,4 to a mixing device 5 similar to the embodiment shown in Fig. 3. The mixing device 5 is connected to a distribution device 16 via a conduit 12 whereby a pump 14 is positioned between the mixing device 5 and the distribution device 16. The distribution device 16 is connected to the inlet openings 7.1, 7.2, 7.3 of the homogenizing devices 6.1, 6.2, 6.3 that are connected in parallel. The outlet openings 8.1, 8.2, 8.3 of the homogenizing devices 6.1, 6.2, 6.3 are connected to a single separation means 9 that divides the combined effluent of the homogenizing devices 6.1, 6.2, 6.3 into a first stream 10 and a second stream 11. The first stream 10 is recycled via a conduit 13 to conduit junction 15 that is positioned between the mixing device 5 and the pump 14.

In a continuous process using the apparatus shown in figure 4, the aqueous emulsifying solution and the rubber solution are continuously fed to the apparatus and the final oil-in-water dispersion is continuously withdrawn as second stream 11.

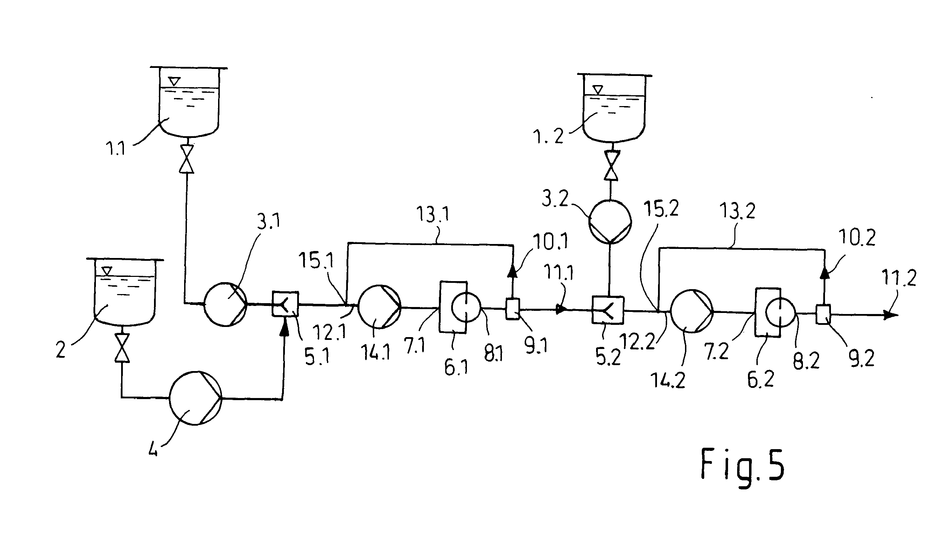

In the embodiment according to figure 5 the apparatus comprises a first container 1.1 for the aqueous emulsifier solution and a container 2 for the rubber solution that are both connected to a first mixing device 5.1 via respective metering pumps 3, 4. The first mixing device 5.1 is connected to the inlet opening 7.1 of first homogenizing device 6.1 via a conduit 12.1. A pump 14.1 is positioned between the first mixing device 5.1 and the homogenizing device 6.1 The outlet openings 8.1 of the first homogenizing device 6.1 is connected to a separation means 9.1 that divides the effluent of the first homogenizing device 6.1 into a first recycle stream 10.1 and a second stream 11.1. The recycled stream 10.1 is returned via a conduit 13.1 to a conduit junction 15.1 that is positioned between the first mixing device 5.1 and the first pump 14.1.

The second stream 11.1 is led to a second mixing device 5.2 to which a second container 1.2 for the aqueous emulsifying solution is connected via a metering pump 3.2. The outlet of the second mixing device 5.2 is connected to the inlet 7.2 of a second homogenizing device 6.2 whereby a pump 14.2 is positioned between the second mixing device 5.2 and the second homogenizing device 6.2. The outlet 8.2 of the second homogenizing device 6.2 is connected to a separating means 9.2 that divides the effluent of the second homogenizing device 6.2 into a first stream 10.2 and a second stream 11.2. The first stream 10.2 is recycled via a conduit 13.2 to a conduit junction 15.2 that is positioned between the second mixing device 5.2 and the second pump 14.2.

When operating the apparatus according to Fig. 5 the aqueous emulsifier solution and the rubber solution are continuously fed to the apparatus whereby the final oil-in-water dispersion is continuously withdrawn from the apparatus as second stream 11.2. Optionally, if necessary, a second amount of aqueous emulsifying solution can be fed to the apparatus via metering pump 3.2 to the second mixing device 5.2.

Furthermore, the present invention will be illustrated by means of the following examples.

### Example 1 and 2 (Comparative Examples)

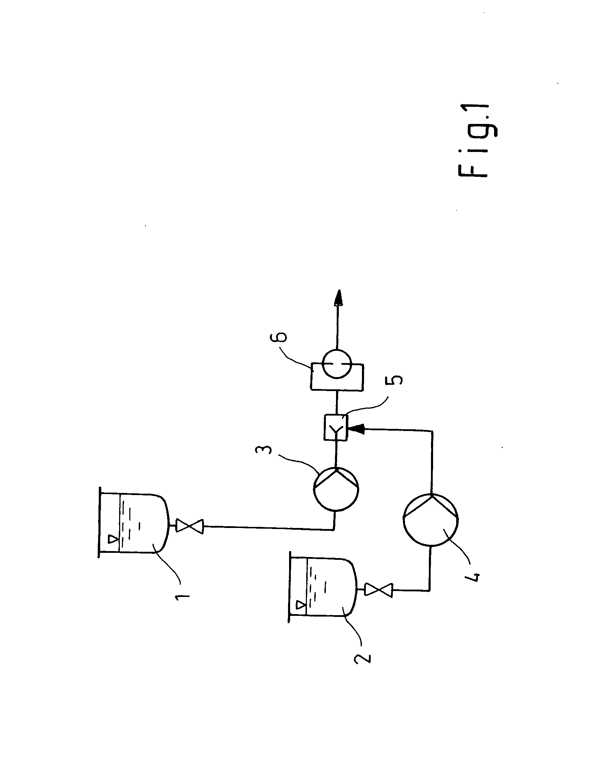

These examples were conducted using the apparatus according to Fig. 1

Emulsifier solution and rubber solution were withdrawn continuously and separately from storage containers 1 and 2. The increase in pressure and metering of the emulsifier solution were achieved using pumps 3 and 4. The oil-in-water emulsion was produced in mixer 5 and this was homogenized in jet disperser 6. The specific conditions for conducting Examples 1 and 2 are summarized in Table 1. No stable dispersion could be obtained with the process using the apparatus according to Fig. 1.

### Examples 3 and 4 (Comparative Examples)

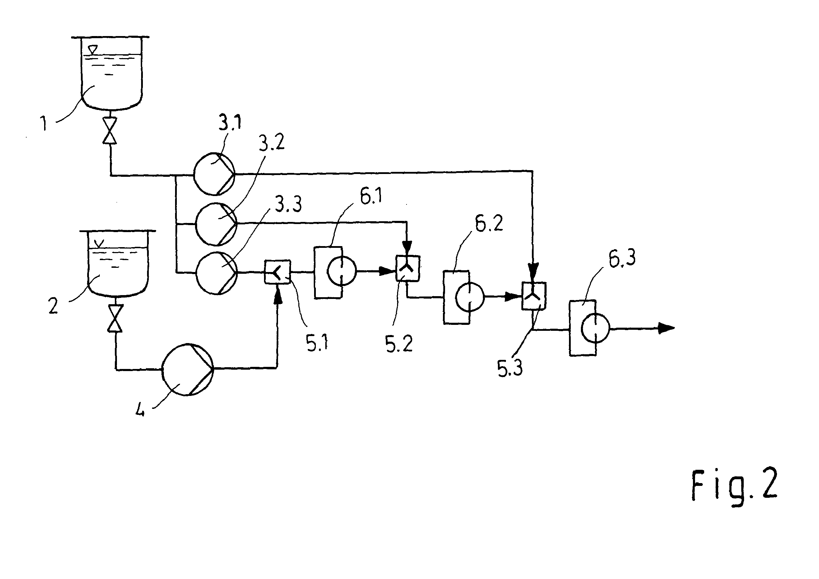

A polymer dispersion was prepared by means of the continuous process using the prior art apparatus according to Fig. 2.

Emulsifier solution and rubber solution were continuously and separately withdrawn from storage containers 1 and 2. Increasing the pressure and metering the rubber solution were achieved using pump 4 in a mixer 5.1, increasing the pressure and metering the emulsifier solution, divided into three substreams, into mixers 5.1, 5.2 and 3.3 was achieved with pumps 3.1, 3.2 and 3.3. The mixture is homogenized in mixer 5.2 by means of a jet disperser 6.1 and the mixture is homogenized in mixer 5.3 by a jet disperser 6.2. A finely divided oil-in-water emulsion was specifically produced by using this stepwise procedure. The partial amounts of emulsifier solution were adjusted so that phase inversion took place only in jet disperser 6.3.

Three nozzles of the same structural type were used in series, wherein the pressure drop across all the nozzles was 24 bar.

A stable dispersion was obtained.

The specific conditions for conducting Examples 3 and 4 are summarized in Table 1.

### Examples 5 to 8 (Examples according to the present invention)

Polymer dispersions were prepared by using the apparatus according to the present invention shown in Fig. 3.

Emulsifier solution and rubber solution were withdrawn from storage containers 1 and 2 and continuously and separately fed to the mixer 5. The increase in pressure was achieved using pump 14. The effluent from the jet disperser 6 was divided into a recycle stream 10 and a stream for recovering the polymer dispersion 11. The portion of the effluent recycled to the jet dispenser 6 and the specific conditions for conducting Examples 5 to 8 are summarized in Table 1.

From the resultant aqueous dispersions of all examples the solvent (hexane) was removed by first distilling at ambient pressure with a bottoms temperature of 60 - 80°C for 12 - 14 h and subsequently at a pressure of 200 - 250 mbar and a bottoms temperature of 55 to 65°C for 25 h resulting in a residual hexane content of below 500 ppm. After removal of the solvent the dispersion was concentrated by creaming using 0.1 to 0.3 wt-% Alginate based on the total solids of the dispersion resulting in a solids content of the concentrated aqueous dispersion of 45 to 60 wt.-%. The polymer particle sizes described in the examples are determined on the final concentrated aqueous dispersion using an ultracentrifuge as described in Journal of Colloid Polymer Science, 267 (1989), 1113.

The viscosities of the organic phases were measured with a rotational viscometer up to a shear rate of 100 s⁻¹. The interfacial tension between organic and aqueous phase was measured with an annular tensiometer.

In all examples the same homogenizing device i.e. a jet disperser having 6 orifices 0.5 mm wide and 0.75 mm long was used.

As can be seen from the results as summarized in Table 1 a single pass through the jet disperser even at a pressure of as high as 60 bar does not result in a stable polymer dispersion.

Although the process according to Comparative Examples 3 and 4 results in stable dispersions at a pressure of 24 bar the resultant polymer particle sizes are considerably high.

In contrast thereto the examples according to the present invention although using a process and apparatus that is less cost intensive in terms of investment costs and process costs stable polymer dispersions where the particle size is considerably smaller than with the prior art process, can be achieved at considerably lower pressures and also very low emulsifier concentrations.

Thus it has been shown that the initially discussed object has been attained by the process of the present invention using an apparatus according to the present invention.

**Table 1:**

| Example | Rubber | Ratio organic/aqueous phase | Amount of Marlon A¹ in parts by 100 parts of emulsion | Viscosity [mPas] | Interfacial tension [mN/m] | Recycle Ratio² | Homogenizing pressure [bar] | Particle Size d₅₀ [nm] | Stability |
|---|---|---|---|---|---|---|---|---|---|
| 1 | BBX³ | 40:60 | 12 | 1200 | 2 | - | 20 | - | instable |
| 2 | BBX | 40:60 | 12 | 1200 | 2 | - | 60 | - | instable |
| 3 | BBX | 60:40 | 5.3 | 1200 | 2 | - | 24 | 600 | stable |
| 4 | IIR⁴ | 40:60 | 12 | 1200 | 2 | - | 24 | 1000 | stable |
| 5 | BBX | 50:50 | 7 | 1200 | 2 | 92% | 11.4 | 400 | stable |
| 6 | BBX | 60:40 | 3 | 1200 | 2 | 88% | 10.3 | 566 | stable |
| 7 | BBX | 60:40 | 6 | 1200 | 2 | 87% | 10,2 | 498 | stable |
| 8 | BBX | 70:30 | 6 | 1200 | 2 | 87% | 12.1 | 556 | stable |

| | | | | | | | | | |
|---|---|---|---|---|---|---|---|---|---|
| ¹ sodium dodecylbenzene sulphonate (Sasol, Marl Germany) ² percentage of the effluent from the homogenizer recycled to the homogenizer ³ Bromobutyl X2. ML 1+8 (125°C)= 46, 15% solution in hexane (Lanxess, Leverkusen Germany) ⁴ Polysar Butyl 101-3, ML 1+8 (125°C) = 51, 15% solution in hexane | | | | | | | | | |

### List of reference signs

- 1: container for emulsifier solution
- 2: container for rubber solution
- 3: metering pump(s) for emulsifier solution
- 4: metering pump for rubber solution
- 5: mixer
- 6: homogenizing device(s)
- 7: inlet opening(s)
- 8: outlet opening(s)
- 9: separating means
- 10: first stream
- 11: second stream
- 12: conduit
- 13: conduit
- 14: pump
- 15: conduit junction
- 16: distribution device

## Claims

**1.** A continuous process for preparing aqueous polymer dispersions by
a) continuously forming a heterogeneous mixture of an organic liquid phase comprising a polymer and an aqueous phase in presence of an emulsifier;
b) subjecting the mixture obtained in step a) to a shear force in at least one homogenizing device (6); and
c) continuously recovering an oil-in-water dispersion, **characterized by**
d) continuously recycling a portion of the effluent from at least one homogenizing device (6) to the same homogenizing device (6) or to an other homogenizing device that is not downstream with respect to the flow direction from said homogenizing device (6).

**2.** The process of claim 1, wherein a plurality of homogenizing devices (6) are connected in parallel with respect to the flow direction and a portion of the effluent of at least one of the homogenizing devices (6) is recycled to any of the homogenizing devices (6).

**3.** The process of claim 1, wherein a plurality of homogenizing devices (6) are connected in series with respect to the flow direction and a portion of the effluent of at least one of the homogenizing devices (6) is recycled to the same homogenizing device (6) or to an another homogenizing device (6) upstream with respect to the flow direction from said homogenizing device (6).

**4.** The process of any of the preceding claims, wherein the number of homogenizing devices (6) is 2 or 3.

**5.** The process of claim 1, wherein a single homogenizing device (6) is employed.

**6.** The process of any of the preceding claims, wherein a jet disperser is employed as at least one of the homogenizing devices (6).

**7.** The process of claim 2, wherein up to 100, preferably 20 to 80 and more preferred 25 to 50 jet dispersers are connected in parallel.

**8.** The process of any of the preceding claims, wherein the organic phase comprises an organic solvent that is immiscible with water that is at least partially removed from the recovered oil-in-water dispersion.

**9.** The process of any of the preceding claims, wherein the interfacial tension between organic phase and aqueous phase is 0.01 to 30 mN/m, preferably 0.5 to 30 mN/m.

**10.** The process of any of the preceding claims, wherein the mixture is subjected in at least one homogenizing device (6) to a shear power of 1 x 10³ to 1 x 10⁸ W/cm³, preferably of 1 x 10⁶ to 1 x 10⁷ W/cm³.

**11.** The process of any of the preceding claims, wherein the ratio by volume of organic phase to aqueous phase is in the range of 80:20 to 20:80, preferably in the range of 70:30 to 30 to 70.

**12.** The process of any of the preceding claims, wherein the percentage of the recycled portion of the total effluent from at least one homogenizing device (6) is selected to be in the range of 10-95%, preferably 30-90%, more preferred 50-90%.

**13.** The process of any of the preceding claims, wherein the polymer is selected from polyolefins, copolymers of olefins with polar copolymerizable monomers, diene polymers and copolymers of conjugated dienes with copolymerizable monomers, polyurethanes, polyesters, polyesteramides, polyethers, polycarbonates and modifications and mixtures thereof.

**14.** The process of claim 8, whereby the organic solvent is substantially removed from the aqueous polymer dispersion and the solids content is adjusted to the desired use.

**15.** The process of claim 14, wherein polymer particles have a weight average particle size d₅₀ determined in an ultracentrifuge of 0.1 to 10 µm, preferably of 0.2 to 1 µm.

**16.** An apparatus for continuously making an aqueous polymer dispersion comprising:
a) means (5) for continuously forming a heterogeneous mixture of an organic liquid phase and an aqueous phase;
b) at least one homogenizing device (6) having an inlet opening (7) and an outlet opening (8);
c) conduits (12) for interconnecting said means (5) for continuously forming said heterogeneous mixture to the inlet opening (7) of the at least one homogenizing device (6);
d) means (9) for separating the effluent from the at least one homogenizing device (6) connected to the outlet opening (8) of said at least one homogenizing device (6) into a first stream (10) and into a second stream (11); and
e) means for recovering the aqueous polymer dispersion;
**characterized by**
f) conduits (13) for passing the first stream and connecting the separating means (9) to a conduit junction (15) positioned between the means (5) for forming the heterogeneous mixture and the inlet opening (7) of the same homogenizing device (6) or the inlet opening of another homogenizing device that is not downstream with respect to the flow direction from said homogenizing device (6).

**17.** The apparatus of claim 16, whereby a plurality of homogenizing devices (6) are connected in series with respect to the flow direction and conduits (13) for passing the first stream (12) from at least one of the homogenizing devices (6) are connected to the inlet opening (7) of the same homogenizing devices (6) or to the inlet opening (7) of another homogenizing device (6) upstream with respect to the flow direction from said homogenizing device (6).

**18.** The apparatus of claim 16, whereby a plurality of homogenizing devices (6) are connected in parallel with respect to the flow direction and conduits (13) for passing the first stream (11) from at least one of the homogenizing devices (6) are connected to the inlet opening (7) of any of the homogenizing devices (6).

**19.** The apparatus of claim 18, whereby each of the homogenizing devices (6) are connected to a single separating means (9) and the conduits (13) for passing the first streams (10) is connected to a conduit junction (15) positioned between the means (5) for forming the homogeneous mixture and a pump 14 that is located upstream of the distribution device (16) for distributing the feed to the parallel homogenizing devices (6).

**20.** The apparatus of any of claims 16-18, whereby a pump (14) is positioned between said conduit junction (15) and said inlet opening (7) of the at least one homogenizing device (6).

**21.** The apparatus of any of claims 16-20, wherein the number of homogenizing devices (6) is 2 or 3.

**22.** The apparatus of claim 16, comprising a single homogenizing device (6).

**23.** The apparatus of any of claims 16-22, wherein at least one of the homogenizing devices (6) is a jet disperser.

**23.** The apparatus of claim 19 comprising up to 100, preferably 20 to 80 and more preferred 25 to 50 jet dispersers connected in parallel.
